# FASCICULE DE BREVET EUROPEEN

(11) **EP 2 483 585 B1**
(45) Date de publication et mention de la délivrance du brevet: **13.07.2016**
(21) Numéro de dépôt: 10770578.2
(22) Date de dépôt: 17.09.2010
(51) Int. Cl.: F16L 3/12

(54) **DISPOSITIF DE FIXATION D'UN ELEMENT DE FORME ALLONGEE SUR UN CARTER DE TURBOMACHINE**
VORRICHTUNG ZUR BEFESTIGUNG EINES LÄNGLICHEN ELEMENTS AUF EINEM TURBINENMOTORGEHÄUSE
DEVICE FOR ATTACHING ELONGATE ELEMENT ONTO TURBINE ENGINE HOUSING

(30) Priorité: 28.09.2009 FR 0904616
(43) Date de publication de la demande: 08.08.2012
(73) Titulaire: Snecma, 75015 Paris (FR)
(72) Inventeur: DETERRE, Geoffray, F-77550 Moissy Cramayel Cedex (FR); MAZELLE, Christian Henry, F-77550 Moissy Cramayel Cedex (FR)
(74) Mandataire: Ramey, Daniel
(86) Numéro de dépôt international: PCT/FR2010/051933
(87) Numéro de publication internationale: WO 2011/036381

(56) Documents cités:
- US-A- 3 445 898
- US-A- 5 129 608

## Description

La présente invention définie par les revendications concerne un dispositif de fixation d'un élément de forme allongée, tel par exemple qu'un harnais électrique ou un conduit de fluide, sur un châssis de machine et en particulier sur un carter de turbomachine.

Un harnais électrique est en général fixé sur un carter de turbomachine au moyen d'un collier de serrage qui entoure le harnais et qui comprend une patte de fixation sur le carter. Un anneau élastique est intercalé entre le harnais et le collier pour éviter d'abîmer le harnais au serrage de la vis.

On connaît également un dispositif de fixation d'un harnais électrique sur un carter, ayant une forme sensiblement en Ω, comprenant une partie incurvée entourant le harnais et reliée à ses extrémités à des pattes de fixation sur le carter, par l'intermédiaire de moyens du type vis-écrou.

Les documents US-A-5,129,608, et US-A-3,445,898 décrivent des dispositifs de fixation comportant chacun une partie tubulaire qui est fendue longitudinalement.

Les technologies précitées présentent toutefois de nombreux inconvénients. Chaque dispositif de fixation permet en effet de fixer un harnais électrique ayant un diamètre particulier sur le carter, et il est nécessaire d'avoir autant de références différentes de dispositifs de fixation que de harnais électriques de diamètres différents équipant la turbomachine.

De plus, les dispositifs de fixation connus sont relativement lourds et leur montage nécessite un temps relativement important. Par ailleurs, ces dispositifs de fixation sont indépendants du harnais et sont susceptibles de se séparer du harnais en cas de rupture ou desserrage des vis précitées.

L'invention a pour but de remédier de façon simple, efficace et économique aux inconvénients précités des techniques antérieures.

La présente divulgation concerne un dispositif de fixation d'un élément de forme allongée, tel par exemple qu'un harnais électrique ou un conduit, sur un châssis de machine, en particulier sur un carter de turbomachine, ce dispositif comprenant une partie de serrage destinée à être montée autour de cet élément et solidaire d'au moins une patte de fixation sur le carter, caractérisé en ce que la partie de serrage est tubulaire et réalisée en matériau plastique thermo-rétractable, cette partie ayant initialement un diamètre interne supérieur au diamètre externe de l'élément pour autoriser son montage sur l'élément, et étant destinée à être chauffée pour être rétreinte sur l'élément.

La partie tubulaire du dispositif de fixation, qui est destinée à enserrer l'élément à fixer, est réalisée en matériau plastique thermo-rétractable, c'est-à-dire dans un matériau plastique destiné à se rétracter sous l'effet de la chaleur. Ce matériau est relativement léger par rapport au matériau métallique utilisé pour les dispositifs des technologies antérieures. Le matériau thermo-rétractable est par exemple du Viton®, du Teflon®, ou analogue.

La partie tubulaire du dispositif a initialement un diamètre interne relativement important de façon à pouvoir être engagée sur un élément à fixer de diamètre quelconque, inférieur à ce diamètre interne. Le dispositif de fixation s'adapte donc à des éléments de différents diamètres, au contraire des technologies antérieures.

Cette partie tubulaire est destinée à être rétreinte par chauffage jusqu'à ce qu'elle enserre l'élément. Une fois rétreinte, la partie tubulaire ne peut plus reprendre sa forme initiale, ce qui assure une fixation à demeure du dispositif sur le harnais et évite toute séparation involontaire du dispositif de cet élément. Il est toutefois possible de retirer le dispositif de l'élément en coupant sa partie tubulaire, sur toute sa longueur, au moyen d'une lame par exemple, puis en écartant ses bords longitudinaux coupés l'un de l'autre.

Selon une autre caractéristique, la partie tubulaire du dispositif est fermée ou non fendue, en particulier en direction longitudinale, ce qui assure une bonne fixation de la partie tubulaire sur l'élément après thermorétraction de cette partie.

Selon un mode de réalisation divulgué, la patte de fixation est réalisée en matériau plastique thermo-rétractable et est formée d'une seule pièce avec la partie tubulaire, ce qui permet de faciliter la fabrication du dispositif.

En variante, la patte de fixation est formée par un insert métallique dont une partie est noyée et retenue dans le matériau thermo-rétractable de la partie tubulaire. La partie de la patte de fixation qui est noyée dans le matériau thermo-rétractable peut comprendre des moyens d'ancrage dans le matériau.

La patte de fixation peut comprendre au moins un orifice de passage d'une vis, cet orifice ayant une forme oblongue ou allongée en direction transversale, de façon à rattraper d'éventuels jeux de montage du dispositif sur le carter dans cette direction.

La patte de fixation s'étend par exemple sensiblement parallèlement à l'axe longitudinal de la partie tubulaire du dispositif.

Le présent document concerne également un harnais électrique ou un conduit pour une turbomachine, caractérisé en ce qu'il porte un dispositif de fixation du type précité.

Il concerne encore une turbomachine, telle qu'un turboréacteur ou un turbopropulseur d'avion, caractérisée en ce qu'elle comprend un dispositif tel que décrit ci-dessus.

La divulgation concerne également un procédé de fixation d'un élément de forme allongée, tel par exemple qu'un harnais électrique ou un conduit, sur un châssis de machine, en particulier sur un carter de turbomachine, le procédé consistant à engager un dispositif de fixation du type précité sur cet élément, à chauffer la partie tubulaire de cet élément pour la rétreindre jusqu'à ce qu'elle soit serrée sur l'élément, puis à fixer la patte de fixation du dispositif sur le carter au moyen d'au moins une vis passant à travers un orifice de la patte.

La partie tubulaire du dispositif peut en outre être fixée par collage sur l'élément.

Le présent document concerne enfin un procédé de démontage du dispositif tel que décrit ci-dessus, consistant à couper la partie tubulaire du dispositif sur toute sa longueur, puis à la retirer de l'élément.

L'invention sera mieux comprise et d'autres détails, caractéristiques et avantages de la présente invention apparaîtront plus clairement à la lecture de la description qui suit, faite à titre d'exemple non limitatif et en référence aux dessins annexés, dans lesquels :
- la figure 1 est une vue schématique en perspective d'un dispositif de fixation d'un élément de forme allongée sur un carter de turbomachine,
- les figures 2 et 3 sont des vues schématiques en coupe transversale du dispositif et de l'élément à fixer de la figure 1, et représentent des étapes du procédé de montage du dispositif sur cet élément,
- la figure 4 est une vue schématique en perspective d'une variante de réalisation du dispositif, et
- la figure 5 est une vue schématique en coupe transversale d'une autre variante de réalisation du dispositif.

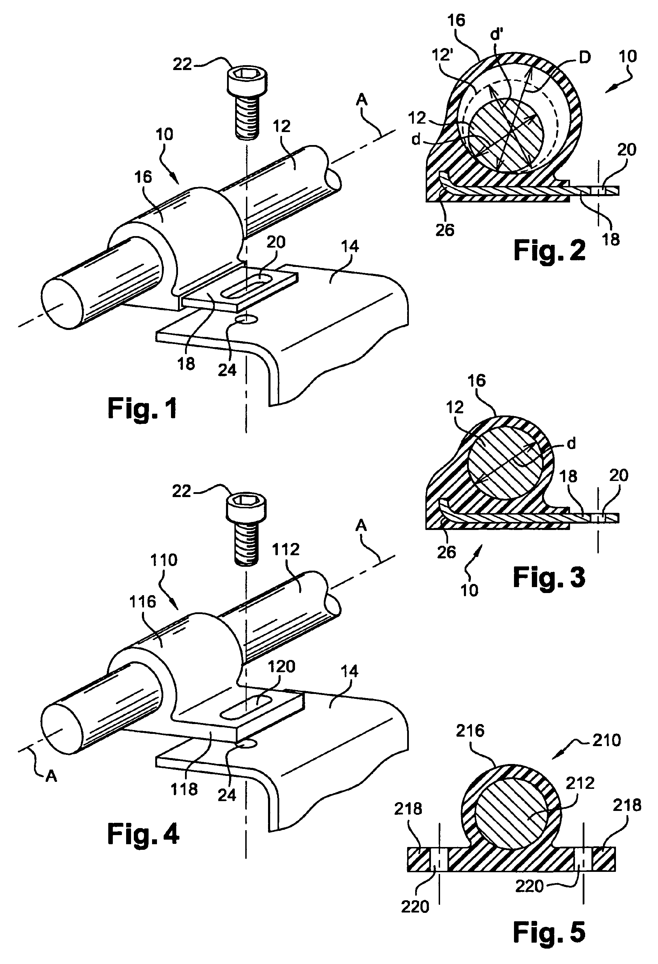

On se réfère d'abord à la figure 1 qui représente un mode de réalisation du dispositif 10 de fixation d'un élément 12 de forme allongée sur un carter 14 de turbomachine, telle qu'un turboréacteur ou un turbopropulseur d'avion, ce dispositif 10 comportant une partie tubulaire 16 qui est engagée et serrée sur l'élément 12 et qui est solidaire d'une patte 18 de fixation sur le carter 14, cette partie tubulaire 16 étant réalisée dans un matériau plastique thermo-rétractable.

L'élément 12 peut être un harnais électrique ou un conduit de fluide (air, huile ou carburant), par exemple.

La patte de fixation 18 est ici formée par une plaque ou un insert métallique plat dont une extrémité est noyée dans le matériau thermo-rétractable de la partie tubulaire 16. Cette patte 18 s'étend ici parallèlement à l'axe longitudinal A de la partie tubulaire 16 (qui est confondu avec l'axe longitudinal de l'élément 12), sensiblement tangentiellement à la surface cylindrique externe de cette partie tubulaire.

La patte 18 s'étend sensiblement sur toute la longueur de la partie tubulaire 16, dans une direction parallèle à l'axe A. La patte de fixation 18 est ancrée solidement dans le matériau thermo-rétractable de la partie tubulaire 16 qui est surmoulée sur la patte 18. Pour cela, l'extrémité 26 de la patte noyée dans le matériau peut être repliée ou courbée, comme cela est visible aux figures 2 et 3, ou comprendre des orifices remplis du matériau thermo-rétractable au surmoulage.

La patte 18 comprend un orifice 20 de passage d'une vis 22 qui est destinée à être engagée dans un orifice 24 correspondant du carter 14 et à recevoir à son extrémité libre un écrou (non représenté) ou à être vissée directement dans l'orifice 24 du carter.

L'orifice 20 de la patte 18 a avantageusement une forme oblongue ou allongée, dont l'axe est parallèle à une direction dans laquelle un jeu peut apparaître au montage, entre le dispositif 10 et le carter 14. Dans l'exemple représenté, l'orifice 20 a une forme allongée dans une direction parallèle à l'axe A, ce qui signifie qu'un jeu peut apparaître dans cette direction au montage du dispositif 10 sur le carter. Autrement dit, la forme allongée ou oblongue de l'orifice 20 permet de compenser ce jeu, qui est au maximum de quelques millimètres.

Le montage du dispositif 10 sur l'élément 12 va maintenant être décrit en référence aux figures 3 et 4.

Le dispositif 10 est représenté dans son état initial, avant rétreint par chauffage, en figure 2. La partie tubulaire 16 a alors un diamètre interne D supérieur au diamètre externe d de l'élément 12 sur lequel le dispositif doit être fixé. Cette partie 16 peut être engagée sur un élément de diamètre quelconque (comme cela est représenté schématiquement par l'élément 12' de diamètre externe d' supérieur à d), ce diamètre étant toutefois nécessairement inférieur au diamètre D précité.

Le dispositif 10 est amené sur une extrémité de l'élément 12 puis est déplacé autour de l'axe A, jusqu'à ce que la patte de fixation 18 soit située dans une position prédéterminée.

La partie tubulaire 16 du dispositif est ensuite chauffée de façon à être rétreinte et serrée sur l'élément 12, comme cela est visible en figure 3. Dans cette position rétreinte, le diamètre interne de la partie 16 est au plus égal au diamètre externe d de l'élément 12.

Le dispositif 10 est alors immobilisé sur l'élément 12 par la force de serrage de la partie tubulaire 16 sur cet élément. La fixation du dispositif 10 sur l'élément peut être complétée par collage de la partie tubulaire 16 sur l'élément, la colle étant située entre la surface cylindrique interne de la partie 16 et l'élément et étant disposée sur cette surface préalablement à l'étape de chauffage précitée.

La variante de réalisation du dispositif 110 représentée en figure 4 diffère du dispositif 10 précité en ce que la patte de fixation 118 est formée d'une seule pièce avec la partie tubulaire 116 et est donc également réalisée en matériau plastique thermo-rétractable.

Cette patte 118 est sensiblement plane et s'étend parallèlement à l'axe longitudinal A de la partie tubulaire 116 (qui est confondu avec l'axe de l'élément 112). La patte 118 comprend également un orifice 120 de forme oblongue de passage d'une vis 22 de fixation du dispositif sur le carter 14.

Dans l'autre variante de réalisation représentée en figure 5, la partie tubulaire 216 est solidaire de deux pattes 218 s'étendant de part et d'autre de la partie 216 dans un même plan sensiblement parallèle à l'axe de la partie tubulaire, de façon à ce que le dispositif de fixation ait sensiblement une forme en Ω. Chaque patte 218 comprend un orifice 220 de passage d'une vis de fixation sur un carter de turbomachine.

Les dispositifs 10, 110 et 210 peuvent être retirés des éléments 12, 112 et 212 par découpe de leur partie tubulaire 16, 116, 216 avec une lame, telle qu'un cutter, dans une direction parallèle à l'axe A, sur toute leur longueur. Il suffit alors d'écarter les bords longitudinaux coupés de la partie tubulaire l'un de l'autre, d'une distance supérieure au diamètre de l'élément, puis de retirer le dispositif de l'élément.

## Revendications

1. Dispositif (10) de fixation d'un élément (12) de forme allongée, tel par exemple qu'un harnais électrique ou un conduit, sur un châssis de machine, en particulier sur un carter (14) de turbomachine, ce dispositif comprenant une partie de serrage (16) destinée à être montée autour de cet élément et solidaire d'au moins une patte (18) de fixation sur le carter, **caractérisée en ce que** la partie de serrage est tubulaire et est réalisée en matériau plastique thermo-rétractable, cette partie ayant initialement un diamètre interne (D) supérieur au diamètre externe (d) de l'élément pour autoriser son montage sur l'élément, et étant destinée à être chauffée pour être rétreinte sur l'élément, et **en ce que** la patte de fixation (118, 218) est réalisée en matériau plastique thermo-rétractable et est formée d'une seule pièce avec la partie tubulaire (116, 216).

2. Dispositif selon la revendication 1, **caractérisé en ce que** la patte de fixation (18) comprend au moins un orifice (20) de passage d'une vis (22), cet orifice ayant une forme oblongue ou allongée en direction transversale, de façon à rattraper d'éventuels jeux de montage du dispositif sur le carter (14) dans cette direction.

3. Dispositif selon l'une des revendications précédentes, **caractérisé en ce que** la partie tubulaire est non fendue en direction longitudinale.

4. Assemblage comprenant un élément de forme allongée, tel qu'un harnais électrique ou un conduit de fluide pour une turbomachine, et un dispositif de fixation (10) selon l'une des revendications 1 à 3.

5. Turbomachine, telle qu'un turboréacteur ou un turbopropulseur d'avion, **caractérisée en ce qu'**elle comprend au moins un dispositif de fixation (10) selon l'une des revendications 1 à 3.

6. Procédé de fixation d'un élément (12) de forme allongée, tel par exemple qu'un harnais électrique ou un conduit de fluide, sur un châssis de machine, en particulier sur un carter (14) de turbomachine, **caractérisé en ce qu'**il consiste à engager un dispositif de fixation (10) selon l'une des revendications 1 à 3 sur cet élément, à chauffer la partie tubulaire (16) de cet élément pour la rétreindre jusqu'à ce qu'elle soit serrée sur l'élément, puis à fixer la patte de fixation (18) du dispositif sur le carter au moyen d'au moins une vis (22) passant à travers un orifice (20) de la patte.

7. Procédé selon la revendication 6, **caractérisé en ce que** la partie tubulaire (16) du dispositif est en outre fixée par collage sur l'élément (12).

8. Procédé de démontage d'un dispositif de fixation d'un élément de forme allongée, **caractérisé en ce qu'**il consiste à:
- fournir un dispositif de fixation selon l'une des revendications 1 à 3 ;
- couper la partie tubulaire (16) du dispositif sur toute sa longueur, puis à la retirer de l'élément (12).

## Patentansprüche

1. Befestigungsvorrichtung (10) für ein längliches Element (12), wie z.B. eine elektrische Triebwerksausrüstung oder eine Leitung, auf einem Maschinenrahmen, insbesondere auf einem Turbomaschinengehäuse (14), wobei diese Vorrichtung ein Anpressteil (16) enthält, das um dieses Element montiert und mit mindestens einer Befestigungslasche (18) auf dem Gehäuse fest verbunden werden soll, **dadurch gekennzeichnet, dass** das Anpressteil röhrenförmig ist und aus einem wärmeschrumpfbaren Kunststoff hergestellt ist, wobei dieses Teil anfänglich einen Innendurchmesser (D) aufweist, der größer ist als der Außendurchmesser (d) des Elements, um auf dieses Element montiert werden zu können, und dazu bestimmt ist, erhitzt zu werden, um auf dem Element zu schrumpfen, und dadurch, dass die Befestigungslasche (118, 218) aus wärmeschrumpfbarem Kunststoff hergestellt ist und zusammen mit dem röhrenförmigen Teil (116, 216) ein Stück bildet.

2. Vorrichtung nach Anspruch 1, **dadurch gekennzeichnet, dass** die Befestigungslasche (18) mindestens eine Durchgangsöffnung (20) für eine Schraube (22) umfasst, wobei diese Öffnung in Querrichtung länglich geformt ist, so dass eventuell bei der Montage der Vorrichtung auf dem Gehäuse (14) in dieser Richtung entstehende Spiele ausgeglichen werden können.

3. Vorrichtung nach einem der vorhergehenden Ansprüche, **dadurch gekennzeichnet, dass** das röhrenförmige Teil in Längsrichtung nicht geschlitzt ist.

4. Montierte Vorrichtung mit einem länglichen Element, wie z.B. einer elektrischen Triebwerksausrüstung oder einer Fluidleitung für eine Turbomaschine, und einer Befestigungsvorrichtung (10) nach einem der Ansprüche 1 bis 3.

5. Turbomaschine wie z.B. ein Turbostrahltriebwerk oder ein Turbopropellertriebwerk eines Flugzeugs, **dadurch gekennzeichnet, dass** sie mindestens eine Befestigungsvorrichtung (10) nach einem der Ansprüche 1 bis 3 enthält.

6. Verfahren zur Befestigung eines länglichen Elements (12), z.B. einer elektrischen Triebwerksausrüstung oder einer Fluidleitung, am Rahmen einer Maschine, inbesondere an einem Turbomaschinengehäuse (14), **dadurch gekennzeichnet, dass** es darin besteht, auf diesem Element eine Befestigungsvorrichtung (10) nach einem der Ansprüche 1 bis 3 anzubringen, das röhrenförmige Teil (16) dieses Elements zu erhitzen, um es zu schmälern, bis es eng am Element anliegt, und die Befestigungslasche (18) der Vorrichtung mit mindestens einer Schraube (22), die durch eine Öffnung (20) der Lasche hindurchgeschoben wird, am Gehäuse zu befestigen.

7. Verfahren nach Anspruch 6, **dadurch gekennzeichnet, dass** das röhrenförmige Teil (16) der Vorrichtung ferner durch Kleben am Element (12) fixiert ist.

8. Verfahren für die Demontage eines Befestigungselements von einem länglichen Element, **dadurch gekennzeichnet, dass**:
- eine Befestigungsvorrichtung nach einem der Ansprüche 1 bis 3 bereit gestellt wird;
- das röhrenförmige Teil (16) der Vorrichtung über die ganze Länge abgetrennt und von Element (12) entfernt wird.

## Claims

1. A device (10) for fastening an element (12) of elongate shape, such as for example an electrical harness or a duct, to a structure of a machine, in particular to a turbine engine casing (14), the device comprising a clamping portion (16) for mounting around the element and secured to at least one tab (18) for fastening to the casing, the device being **characterized in that** the clamping portion is tubular and made of a heat-shrink plastics material, said portion initially having an inside diameter (D) that is greater than the outside diameter (d) of the element so as to allow it to be mounted on the element, and being designed to be heated in order to be shrunk onto the element, and **in that** the fastener tab (118, 218) is made of heat-shrink plastics material and is made integrally with the tubular portion (116, 216).

2. A device according to claim 1, **characterized in that** the fastener tab (18) includes at least one orifice (20) for passing a screw (22), the orifice being oblong or elongate in shape in a transverse direction so as to accommodate possible assembly offsets between the device and the casing (14) in this direction.

3. A device according to any preceding claim, **characterized in that** the tubular portion is not split in the longitudinal direction.

4. An assembly comprising an element of elongate shape, such as an electrical harness or a fluid duct for a turbine engine, the element being **characterized in that** it carries a fastener device (10) according to any one of claims 1 to 3.

5. A turbine engine, such as an airplane turboprop or turbojet, the engine being **characterized in that** it includes at least one fastener device (10) according to any one of claims 1 to 3.

6. A method of fastening an element (12) of elongate shape, such as for example an electrical harness or a fluid duct, to a structure of a machine, in particular to a casing (14) of a turbine engine, the method being **characterized in that** it consists in engaging a fastener device (10) according to any one of claims 1 to 3 on said element, in heating the tubular portion (16) of said device to shrink it until it is clamped onto the element, and then fastening the fastening tab (18) of the device to the casing by means of at least one screw (22) passing through an orifice (20) of the tab.

7. A method according to claim 6, **characterized in that** the tubular portion (16) of the device is also fastened on the element (12) by adhesive.

8. A method of removing a fastener device from an element of elongate shape, the method being **characterized in that** it consists in :
- providing a fastener device according to any one of claims 1 to 3;
- cutting the tubular portion (16) of the device over its entire length, and then withdrawing it from the element (1
